Europäisches Patentamt

European Patent Office

Office européen des brevets

(19)

(11) Publication number: 0 373 657
A2

## (12) EUROPEAN PATENT APPLICATION

(21) Application number: 89123173.0

(22) Date of filing: 14.12.89

(51) Int. Cl.⁵: D02G 3/04, F16D 69/02

(30) Priority: 15.12.88 GB 8829209

(43) Date of publication of application:
20.06.90 Bulletin 90/25

(84) Designated Contracting States:
DE ES FR IT NL

(71) Applicant: FERODO LIMITED
20 St. Mary's Parsonage
Manchester M3 2NL(GB)

Applicant: TBA Industrial Products Limited
20, St. Mary's Parsonage
Manchester M3 2NL(GB)

(72) Inventor: Harding, John David 11 The
Crescent
Off Hayfield Road Chapel en le Frith
Via Stockport Cheshire SK12 6JL(GB)
Inventor: Hayhurst, Peter 30 Hilda Avenue
Tottington
Bury Lancs BL8 3JE(GB)

(74) Representative: Hadfield, Robert Franklin et al
Bowdon House PO Box 20 Ashburton Road
West Trafford Park
Manchester M17 1RA(GB)

(54) Improvements in and relating to yarns.

(57) A clutch facing made from a yarn of core and sheath construction in which the core comprises filaments of glass and is impregnated with polymeric material and the sheath comprises staple organic fibres The amount of polymeric material in the core as impregnant is 5 to 70 parts by weight per 100 parts by weight of glass. The sheath is preferably a mixture of staple glass fibres with staple organic fibres.

A yarn for making such clutch facings is provided in which the polymeric material used to impregnate the core is non-thermoplastic.

EP 0 373 657 A2

## Improvements in and relating to yarns

This invention relates to yarns, and more particularly to yarns which are suitable for use in the manufacture of clutch facings.

Yarns have long been used in the manufacture of clutch facings, the principal material used for this purpose for several decades being asbestos yarn. During the 1970's and more recently, however, there has been intensive development aimed at phasing out the use of asbestos, so that many patents have appeared proposing the use of non-asbestos materials such as glass fibre, aramid fibre, acrylic fibre etc. Examples of such publications are UK patents Nos. 2,000,517; 2,013,223; 1,599,441 and 1,604,827.

Whilst aramid fibre has outstanding physical properties it is also expensive and difficult to process in conventional machines, its toughness creating grave problems when cutting or drilling facings made from it, for example.

Glass filaments are much cheaper and strong, but they also have inherent problems of brittleness and lack of absorbency which mean that they are not used alone. Blends of these fibres with other fibres are proposed, for example in UK Patent 1,599,441 but it is difficult to achieve an optimum combination of performance, processability and cost.

Yarns have been proposed with a core and sheath construction such as in UK Patent Specification No 2,023,684 which discloses yarns of such construction in which the core is coated with a thermoplastic binder which is tacky and a sheath is juxtaposed upon it. European Patent No 0,090,553 also discloses yarns of core and sheath construction for flame retardant fabrics, in which the core of the yarn is of glass and is adhered to a sheath of other fibres by means of a polymer applied to the core, which is again a thermoplastic polymer. Neither of these specifications mentions clutch facings or discloses a yarn suitable for the manufacture of clutch facings.

We have now found a yarn which obviates the disadvantages mentioned above and provides a highly beneficial combination of properties.

According to the present invention a yarn comprises a core and sheath construction wherein

(i) the core comprises a plurality of filaments of glass and is impregnated with a non-thermoplastic polymeric material in an amount of 5 to 70 parts by weight of polymer per 100 parts by weight of glass and

(ii) the sheath surrounds the core and comprises staple organic fibres.

Preferably the sheath comprises a sliver spun around the core and preferably the yarn is produced on a DREF (Registered Trade Mark) friction spinning machine.

The core may make up 5% to 95% by weight of the total yarn, and preferably contains glass filaments with a diameter in the range 3 microns to 22 microns, more preferably 5 to 15 microns. If desired the core may contain a wire, and/or may contain filaments of an organic fibre which may or may not be non-melting. Preferably the core has been textured, eg air-textured, before being impregnated with polymeric material.

The polymeric material with which its core is impregnated is preferably a material having useful properties in a clutch facing, examples of suitable polymers being thermosetting polymeric materials, eg resins such as phenol-formaldehyde resins, and modified phenolformaldehyde resins and rubbers such as nitrile rubber, SBR, polychloroprene etc or thermostable polymeric materials, eg cellulosic polymeric such as starches.

Since the yarn as a whole will be required to be treated with a dope consisting essentially of binder polymer, for example rubber with or without thermosetting resin, and friction and wear modifiers, during the use in the manufacture of a clutch facing, the polymer with which the core is impregnated should be preferably one which is compatible with the dope, and may be the same as, or similar material to, one or more components of the dope.

The sheath of the yarn contains organic fibres with or without other fibres such as glass. The sheath is preferably a mixture of staple glass and organic fibres, and the organic fibre component may be selected from a wide range of organic textile materials. In general the more heat resistant organic fibres such as cellulosic fibre, aramid fibre, carbon fibre, phenolic fibre, polyimide fibre or acrylic fibre are the preferred materials, although less heat resistant fibres such as polyester could be incorporated if required for specific purposes.

The ratio of organic fibres to other fibres in the sheath may be varied over a wide range, for example 2:98 (by weight) up to 100:0.

The invention also provides a clutch facing comprising a binder material and at least one yarn, said yarn comprising a core and sheath construction wherein

(i) the core comprises a plurality of filaments of glass and is impregnated with a polymeric material in an amount of 5 to 70 parts by weight of polymer per 100 parts by weight of glass and

(ii) the sheath surrounds the core and comprises staple organic fibres.

Preferably the clutch facing is made from a yarn in which the core is impregnated with non-thermoplastic polymeric material as previously described.

The invention will now be described in more detail, by way of example only, by means of Examples.

## EXAMPLE 1

A clutch winding yarn was produced by impregnating with an emulsion phenol-formaldehyde resin (R1777 ex Ferodo Limited) a core consisting of an air-textured bundle of glass filaments containing a brass wire. The degree of overfeed in the core during air-texturing was 7% and the bundle of filaments was impregnated by dipping in the resin emulsion.

The impregnated core was dried without curing the resin, and then fed into a DREF (Registered Trade Mark) spinning machine where a sheath of, staple glass and acrylic fibres was spun onto the core.

The finished yarn contained the following materials, in parts by weight: 10.7 parts brass wire, 36.5 parts glass filaments (9 micron), 5.2 parts phenolic resin, 39.6 parts staple glass fibre (9 micron), 8.0 parts acrylic fibre.

The yarn was dipped in a bath of a typical rubber/resin dope of composition as shown below in Table I, the pick-up of dope being solids by weight of yarn and the impregnated yarn is dried.

Table I

| Ingredients | Wt % |
|---|---|
| Rubber compound (*) | 30 |
| Fillers | 46 |
| Friction and wear modifiers | 17 |
| Phenol-formaldehyde resin | 7 |

* The rubber compound used consisted of a mixture of NBR and SBR (51% by weight of the compound, with the balance being reinforcing filler (C.Black) processing oil, accelerators and sulphur).

Sample clutch facings were manufactured by random-winding the yarn on a core, moulding under pressure in a die and baking the moulded product in an oven to cure the thermosetting rubber and resin components. The sample facings had an outside diameter of 200mm and a thickness of 3.5mm. In the finished moulded cured facings the total proportion of fibre and wire was 44% by weight.

When tested in a clutch against a cast-iron flywheel the facings were found to have a friction coefficient in the range 0.36 to 0.45, and to be smooth in operation.

Samples were also tested for burst strength and found to have a burst strength in the range 11,740 rpm to 14,400 rpm. The facings produced were readily ground and drilled, and had a highly satisfactory rate of wear in running tests on vehicles.

## EXAMPLE 2

A clutch winding yarn was produced as described in Example 1, except that the core of air textured glass filaments was impregnated with wheat starch.

To carry out this impregnation firstly 30 parts by weight of wheat starch were stirred into 1000 parts by weight of water at 40°C and the temperature was then raised to 70°C. The resultant gel was stirred into a dispersion of 340 parts by weight of wheat starch in 1000 parts by weight of water at room temperature. A bundle of air-textured glass filaments was impregnated by dipping in the starch dispersion, resulting in a pick-up on the glass filaments of 7.5% by weight of starch based on the weight of the glass.

When the impregnated core had been dried, as in Example 1, the core was fed into a DREF (Registered Trade Mark) spinning maching and a sheath of staple glass and acrylic fibres applied to the core.

The finished yarn contained the following materials:-
glass filaments : 38 pbw, staple glass fibres : 40 pbw, wheat starch : 3 pbw, brass wire : 11 pbw, acrylic fibres : 8 pbw.

A sample of the yarn so made was impregnated with dope and subsequently made into a wound clutch facing the proportion by weight of fibre and wire was 45% and the facings gave a satisfactory performance when tested against a cast iron flywheel.

## Claims

1. A yarn which comprises a core and sheath construction wherein
(i) the core comprises a plurality of filaments of glass and
(ii) the sheath surrounds the core and comprises staple organic fibres,
characterised in that the core is impregnated with non-thermoplastic polymeric material in an amount of 5 to 70 parts by weight of polymer per 100 parts by weight of glass.

2. A yarn according to claim 1 wherein the sheath comprises a sliver spun around the core.

3. A yarn according to claim 1 or 2 wherein the core makes up 5% to 95% by weight of the yarn.

4. A yarn according to any preceding claim wherein the core contains glass filaments with a diameter in the range 3 microns to 22 microns.

5. A yarn according to any preceding claim wherein the core is air-textured before impregnation.

6. A yarn according to any preceding claim wherein the core is impregnated with phenolic resin or modified phenolic resin.

7. A yarn according to any one of claims 1 to 5 in which the core is impregnated with a cellulosic polymeric material.

8. A yarn according to any preceding claim wherein the sheath comprises glass fibres.

9. A yarn according to any preceding claim in which the sheath is made up of organic fibres with or without other fibres the ratio of organic to other fibres being in the range 2:98 to 100:0.

10. A yarn according to any preceding claim in which the organic fibres in the sheath are selected from cellulosic fibres, aramid fibre, carbon fibre, phenolic fibre, polyimide fibre and acrylic fibre and mixtures thereof.

11. A clutch facing comprising a binder material and at least one yarn, said yarn comprising a core and sheath construction characterised in that
(i) the core comprises a plurality of filaments of glass and is impregnated with a polymeric material in an amount of 5 to 70 parts by weight of polymer per 100 parts by weight of glass and
(ii) the sheath surrounds the core and comprises staple organic fibres.

12. A clutch facing according to claim 11 wherein the sheath of the yarn comprises a sliver spun around the core.

13. A clutch facing according to claim 11 or 12 wherein in said yarn the core makes up 5% to 95% by weight of the yarn.

14. A clutch facing according to any one of claims 11 to 13 wherein in said yarn the core contains glass filaments with a diameter in the range 3 microns to 15 microns.

15. A clutch facing according to any one of claims 11 to 14 wherein the core of the yarn is air-textured before impregnation.

16. A clutch facing according to any one of claims 11 to 15 wherein the core of the yarn is impregnated with non-thermoplastic polymeric material.

17. A clutch facing according to any one of claims 11 to 16 in which the core of the yarn is impregnated with a cellulosic polymeric material, or a thermosetting resin.

18. A clutch facing according to any one of claims 11 to 17 wherein the sheath of the yarn comprises glass fibres.

19. A clutch facing according to any one of claims 11 to 18 in which the sheath of the yarn is made up of organic fibres with or without other fibres the ratio of organic to other fibres being in the range 2:98 to 100:0.

20. A clutch facing according to any one of claims 11 to 19 in which the organic fibres in the sheath of the yarn are selected from cellulosic fibres, aramid fibre, carbon fibre, phenolic fibre, polyimide fibre and acrylic fibre and mixtures thereof.